# EUROPEAN PATENT SPECIFICATION

(11) **EP 1 238 223 B1**
(45) Date of publication and mention of the grant of the patent: **17.03.2004**
(21) Application number: 00985576.8
(22) Date of filing: 15.12.2000
(51) Int. Cl.: F16L 19/075

(54) **HYDRAULIC CONNECTORS**
HYDRAULIKVERBINDER
RACCORDS HYDRAULIQUES

(30) Priority: 15.12.1999 GB 9929575; 08.09.2000 GB 0022062
(43) Date of publication of application: 11.09.2002
(73) Proprietor: Oystertec plc, York, North Yorkshire YO43 3BG (GB)
(72) Inventor: DAVIDSON, Paul, Tytherington, Ma cclesfield SK10 2UN (GB)
(74) Representative: Parlett, Peter Michael
(86) International application number: PCT/GB2000/004820
(87) International publication number: WO 2001/044707

(56) References cited:
- WO-A-99/26005
- WO-A-99/40354
- GB-A- 2 314 392
- US-A- 4 669 763
- PATENT ABSTRACTS OF JAPAN vol. 1998, no. 01, 30 January 1998 (1998-01-30) & JP 09 229258 A (MITSUBISHI KAGAKU SANSHI KK), 5 September 1997 (1997-09-05)
- PATENT ABSTRACTS OF JAPAN vol. 018, no. 583 (M-1699), 8 November 1994 (1994-11-08) & JP 06 213381 A (EIZO ABE), 2 August 1994 (1994-08-02)

## Description

### Field of the Invention

This invention relates to hydraulic connectors, in particular, connectors forming a connection between two fluid conveying members. The invention may have application in relation to, for instance, the connection of a standpipe to a flexible hose engaging element or for a connection between two pipe ends. Generally the present invention is concerned with connectors providing a sealed connection between the tubular ends of two fluid conveying members.

### Background to the Invention

In a known hydraulic connector, an end of one fluid conveying element is provided with an enlarged frusto-conical head behind which is located an internally threaded collar or nut. The other fluid conveying member is provided with an externally threaded collar which is for threaded engagement with the first mentioned collar. At its end the second collar is provided with an internally chamfered surface for mating with the external surface of the frusto-conical head of the first collar.

Such an arrangement provides a good mechanical connection between the two fluid conveying members but the sealing effected by the mating engagement of the chamfered surfaces is poor. As a result, a sealing element, such as an O-ring, has been positioned in a circumferential groove located in the frusto-conical surface of the head of the first fluid conveying member. However, even with such a modified arrangement, the sealing has proved unsatisfactory.

There is a need for a hydraulic connector which, under the pressures encountered in water and other fluid conveying systems, will provide a robust connection with secure sealing between the fluid conveying members. Furthermore, such a connection system should be easily assembled and disassembled as and when required.

Traditionally, a hosepipe connection to a pipe carrying, for instance, a female threaded end consists of a bayonet-type hose engaging element carrying a captive nut for engagement with one threaded portion of an intermediate member or nipple. This intermediate member or nipple carries a second threaded portion for engagement with the threaded pipe end. Between the two threaded portions there is located a region with a hexagonal section which may be engaged by hand or a suitable tool while the threaded connections are being made.

The above mentioned intermediate element or nipple is an expensive item in a hose connector. Furthermore, in the case where the pipe end and the hose pipe are of different sizes then two separate connectors are required to achieve both connection and size conversion.

WO 99/40354 A discloses a connector for forming a connection between a pipe or other item having a threaded end and a length of hose, the connector comprising an elongate hose engaging element and, located thereon, a collar having a threaded portion for engagement with the threaded pipe end, the connector being provided with sealing means for sealing between the collar and the hose engaging element.

Preferably, the connector is provided with further sealing means for sealing between the collar and the pipe.

In the embodiment shown in Figure 3 of WO 99/40354 A, the hose engaging element is provided with a groove which is occupied by a split locking ring or circlip. In such an arrangement, it is necessary to maintain the collar on the hose engaging element so that the collar is fitted to the threaded pipe end with the hose engaging element fitted thereto. This is a somewhat cumbersome operation and it would be advantageous if the assembly procedure could be simplified.

### Statements of the Invention

According to the present invention there is provided a connector for forming a connection between the tubular end of a first fluid conveying member and a threaded end of a second fluid conveying member, the connector having a threaded portion for engagement with a threaded end of said second fluid conveying member, means for engaging an external, circumferentially extending groove located on the tubular end of said first fluid conveying member, means for effecting sealing engagement with said tubular end of said first fluid conveying member and means for effecting sealing engagement with said threaded end of said second fluid conveying member.

The second fluid conveying member may have an integral or non-integral threaded end. Typically it includes a non-integral connector on which is located a threaded portion for engagement with the threaded portion of the connector.

Preferably said means for effecting sealing engagement with said threaded end of said second fluid conveying member effects said sealing between radially abutting surfaces of said connector and said threaded end of said second fluid conveying member.

Preferably, said groove engaging means is movable radially between a non-engaging position and an engaging position. More preferably, the groove engaging means are biased into an engaging position.

Preferably said groove engaging element is located rearwardly of said means for effecting sealing engagement with said tubular end of said first fluid conveying member. By "rearwardly" is meant in a direction away from the end of said first fluid conveying member. Accordingly, in use the means for effecting sealing engagement with said tubular end of said first fluid engaging member lies between said groove engaging means and the end of said second fluid engaging member.

Because of the location of the groove engaging means within the connector and the movement of the groove engaging means between engaging and non-engaging positions, the connector may be fitted to the first fluid conveying member, eg a pipe end, without having the second fluid conveying member, eg a hose engaging element, attached thereto. The hose engaging element may then be introduced into the connector, during which process the groove engaging means will move radially from its non-engaging position to an engaging position into which it is biased. The hose engaging element may have the hose attached to it during this process and the fitting of the hose engaging element into the collar may be a simple push-fit operation.

Preferably the connector accommodates both the groove engaging means and the sealing means. Accordingly, these elements are located in a component, namely, the connector, which can be made as robust as necessary. There is no requirement for the first and second fluid conveying elements to be of additional thickness.

The present invention also provides a coupling for forming a connection between the tubular ends of two grooved fluid conveying members, said coupling comprising two connectors of the invention which are capable of threaded engagement with each other in order to effect the coupling between the two grooved fluid conveying members.

It should be appreciated that the present invention has application for the connection together of, for instance, two pipes or between a pipe such as a standpipe and a bayonet type connector which may be connected to a flexible hose.

### Brief description of the drawings

The accompanying drawings are as follows:-
Figure 1A shows an embodiment of the present invention during fitting of the hose engaging element into a connector of the invention;
Figure 1B shows the same embodiment as that of Figure 1A and with the hose engaging element fully fitted into the connector;
Figure 2A shows another embodiment of a connector of the present invention;
Figure 2B shows the hose engaging element of the embodiment of Figure 2A;
Figure 2C shows the embodiment of Figures 2A and 2B with the connector and hose engaging elements fitted together;
Figure 3A shows two pipe ends prior to connection together by means of a coupling including a connector of the present invention;
Figure 3B shows the same embodiment as that of Figure 3A and with coupling effected between the fluid conveying member;
Figure 4A shows two pipe ends together with a coupling including a second embodiment to the present invention prior to connection together of the pipe ends;
Figure 4B shows the arrangement of Figure 4A with the coupling between the pipe ends having been effected;
Figure 5A shows a further embodiment of the present invention during fitting to a hose engaging element; and
Figure 5B shows the arrangement of Figure 5A with the connector in its fully fitted position on the hose engaging element.

### Detailed description of the Invention

The present invention will now be described, by way of examples only, with reference to the accompanying drawings.

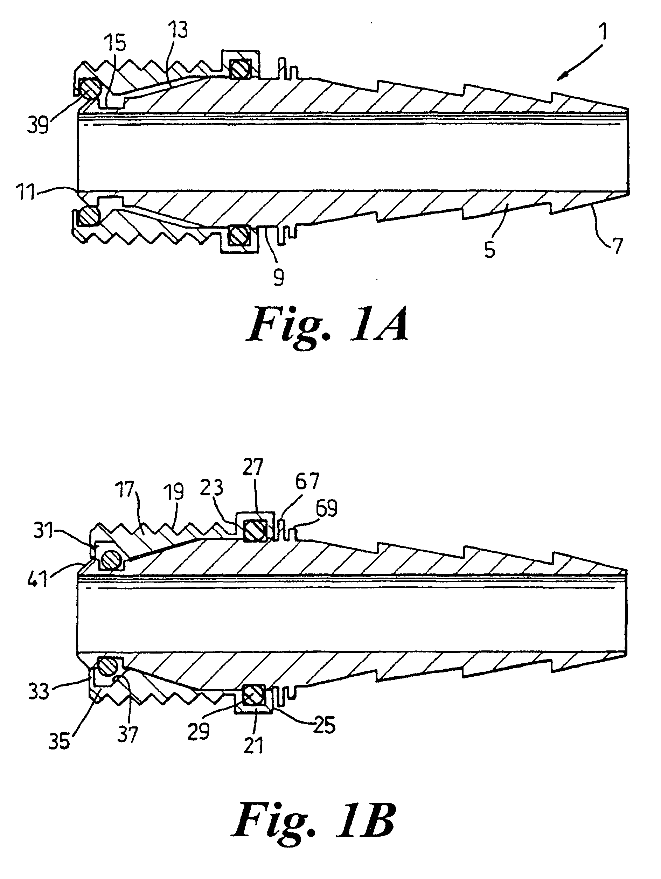

Referring to Figures 1A and 1B of the accompanying drawings, a connector 1 of the present invention is for connection to an elongate hose engaging element 5 which is in the form of a short tube having a plurality of serrations 7 adjacent one end which is the end for insertion into a length of hose (not shown). When inserted into a hose, a compression collar or jubilee clip (not shown) is tightened on the hose in the region of serrations 7 so that the latter bite into the internal surface of the hose and prevent removal of element 5 from the hose.

Annular flanges 67, 69 are located adjacent the serrations 7 and provide between them a recess into which an inturned end of a compression collar may fit. This arrangement prevents the compression, being removed from the connector.

The hose engaging element 5 has an inner surface of constant dimension and an outer surface which, as described above, is serrated over about half its length. The remainder of the outer surface of the hose engaging element 5 includes a middle section 9 of approximately constant external diameter which section carries the flanges 67 and 69. Extending from section 9 to the end 11 of element 5 is an inwardly tapering section 13 which carries an annular recess 15 opening onto the outer surface of the element 5.

The connector 1 of the present invention includes a collar 17 which, when the connector is fitted together (Figure 1B) surrounds the tapered section 13 and part of the middle section 9 of the hose engaging element 5, that is to say, that part of the hose engaging element which is located between flange 67 and the end 11 of the element.

Collar 17 includes an externally threaded portion 19 extending from one end of the collar to a position adjacent the other end. At this other end is located an O-ring accommodating portion 21 which is a recess defining structure having two radially extending annular walls 23, 25 and an interconnecting cylindrical wall 27. The outer diameter of portion 21 of collar 17 is greater than that of the threaded section 19 of this collar. An O-ring 29 is located in the recess defined by portion 21 and the free surface of the O-ring bears against the outer surface of section 9 of hose engaging element 5 when these two elements of the connector are fitted together.

Internally collar 5 has a profile matching that of sections 9 and 13 of hose engaging element 5, as best indicated in Figure 1B. However, at that end remote from portion 21, collar 17 includes an internal recess 31 defined by inwardly extending flange 33, longitudinally extending recess of base 35 and wall 37 which tapers inwardly from base 35 in a direction towards portion 21 of the collar 17.

Located within recess 31 is an H/T steel split ring 39 which is expandable between a relatively small diameter configuration as shown in Figure 1B and a relatively larger diameter configuration as shown in Figure 1A. It is internally spring-biased towards the position shown in Figure 1B.

To make a connection between a pipe end and a hose, the collar 17 is screwed into the threaded pipe end. The hose engaging element 5 is then fitted to the hose (not shown). Finally, the hose engaging element 5, with attached hose, is pushed into the collar 17. When the element 5 reaches the position shown in Figure 1A, the tapered nose portion 41 of the collar pushes outwardly on split ring 39 so that it fully occupies recess 31. The nose portion 41 can then move past split ring 39 until the position shown in Figure 1B is reached. The split ring 39, which is inwardly spring biased, then snaps into the recess 31 of element 5. As can be seen in Figure 1B, the split ring 39 extends outwardly from recess 31 thereby preventing the element 5 being pulled out of the collar 17. The hose (not shown) can however be removed from the element 5.

It should be appreciated that, when assembled, the collar 17 is still capable of circular movement relative to element 5.

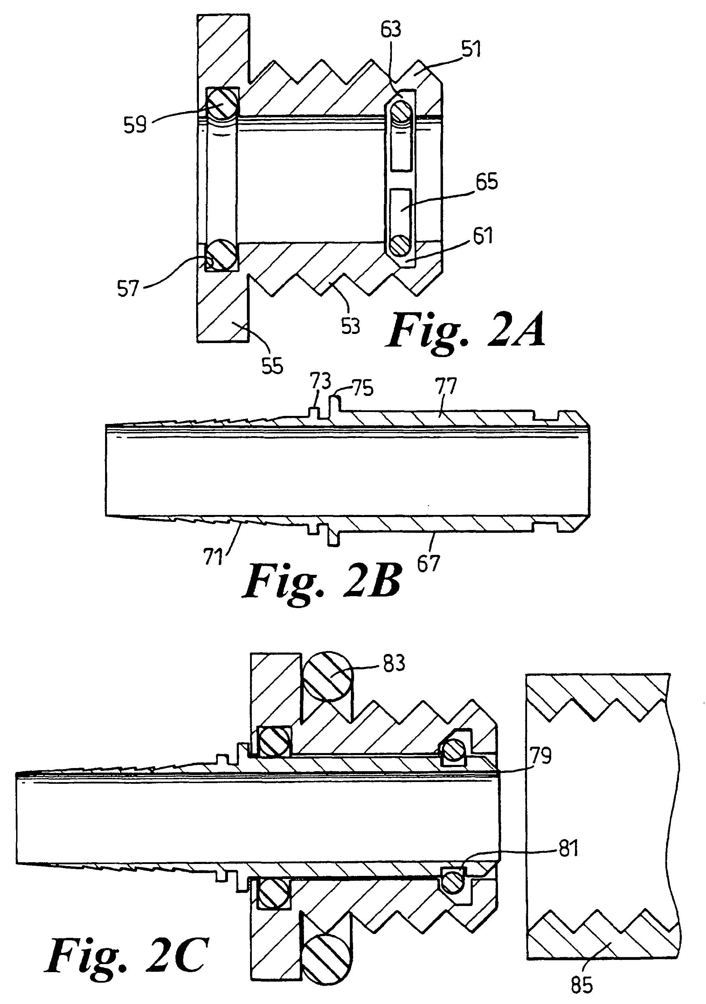

Referring to Figures 2A to 2C, there is illustrated a further embodiment in accordance with the present invention. A collar 51 has a threaded section 53 extending over most of its external surface. At one end, collar 51 terminates in an outwardly extending flange 55. Internally, this flange 55 defines a recess 57, accommodating an O-ring 59. Adjacent its other end collar 51 is provided with a further internal recess having a part-tapered wall on that side of the recess closer to flange 55. Accommodated within recess 63 is a split ring 65.

The hose engaging element 67 is substantially tubular with a constant internal diameter. It includes a serrated section 71, flanges 73 and 75 providing a recess accommodating an intumed end of a compression collar (not shown) and a further section 77 of constant external diameter up to a position adjacent the end 79 of the element. At this position, element 67 is provided with an external recess 81 and the very end of element 67 adjacent this recess is tapered.

The connector shown in Figures 2A to 2C may be fitted together in the manner described above with reference to Figures 1A and 1B. Figure 2C additionally shows sealing means 83, in the form of an O ring, for providing sealing between collar 51 and a threaded pipe end 85.

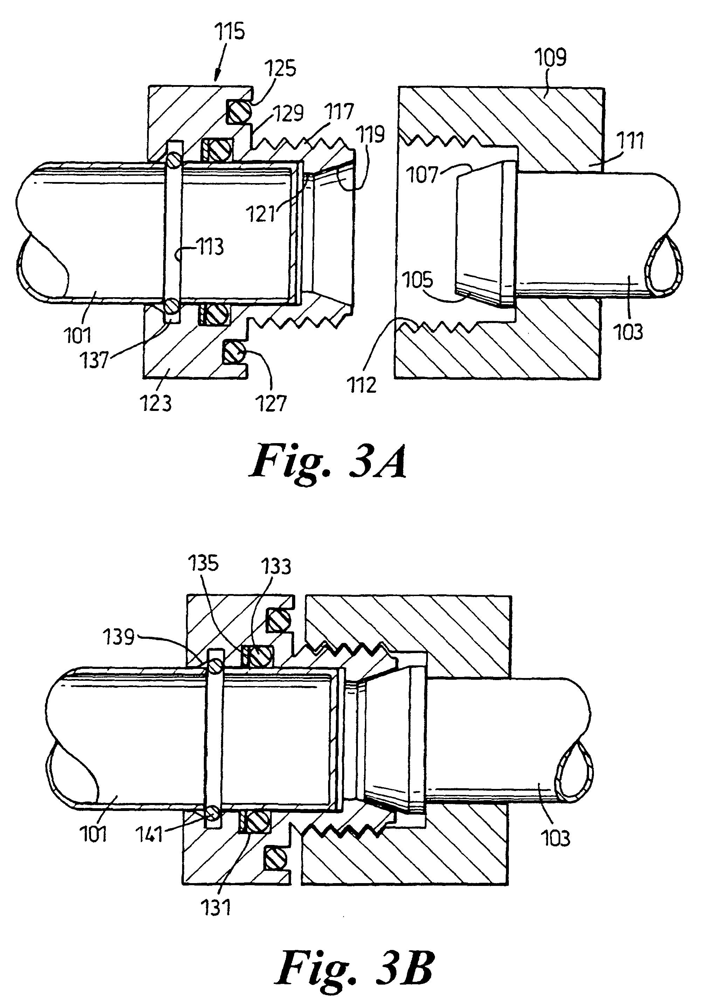

Referring to Figures 3A and 3B of the accompanying drawings, there is illustrated the connection together of two pipe ends 101 and 103. Pipe end 101 is provided with an enlarged head portion 105 which has an outer frusto-conical surface 107 sloping inwardly in a direction towards the end of the pipe. Pipe end 103 is also provided with a collar or nut 109 which is prevented from longitudinal movement towards the end of the pipe by means of the enlarged head portion 105 against which it may abut by means of inwardly extending flange 111 of the nut 109. Forward of flange 111, the inner surface of nut 109 is threaded along that part of its length extending from the forward end of nut 109, the thread covering about two-thirds of the length between the forward end and the flange 111. As will be seen from, for instance, Figure 3A, the nut extends forwardly beyond the forward surface of pipe end 103 when it is abutting the head 105 of pipe end 103.

The other pipe end 101 is provided with an external circumferential groove 113 located some distance rearwardly of the end of pipe end 101. Otherwise the pipe end is of uniform outer diameter.

Coupling of pipe end 101 with the pipe end/nut combination 103/111 may be effected by means of a connector of the present invention indicated generally at 115.

This connector 115 is in the form of a collar or nut which is provided. at its forward end, with an externally threaded portion 117 which is for mating engagement with the corresponding threaded portion 112 of nut 109. The forward end of nut 115 is provided internally with a frusto-conical or chamfered surface 119 which corresponds to the frusto-conical surface 107 of head portion 105 of pipe end 103.

Rearwardly of chamfered portion 119 of nut 115 the internal profile of the nut is stepped outwardly to provide a shoulder 121 which would prevent movement of pipe end 1 forwardly beyond this position within nut 115.

Rearwardly of threaded portion 117 of nut 115 the nut has an enlarged portion 123 whose outer diameter is substantially the same as the outer diameter of nut 111. At the forward surface of enlarged portion 123 of nut 115 an annular recess 125 accommodates an O-ring 127 which extends slightly forwardly of the front surface 129 of enlarged portion 123.

A further recess 131 opens onto the internal surface of nut 115 within enlarged portion 123 and accommodates a further O-ring 133 and an anti-extrusion ring 135. O-ring 133 extends slightly out of recess 131.

Rearwardly of recess 131, the enlarged portion 123 of nut 115 is provided with a further recess 137 which again opens onto the internal surface of nut 115. Recess 137 is substantially rectangular in cross section but is provided with a rearward chamfered portion 139. Within recess 137 there is located a split ring 141 which is made of, for instance, H/T steel. This split ring 139 is expandable between a relatively small diameter configuration and a relatively larger diameter configuration as shown in Figures 3A and 3B. It is spring biased towards the smaller diameter configuration.

In order to assemble the coupling, the connector 115 of the invention is first pushed over the pipe end 101 thereby moving the split ring 141 relatively outwardly into its recess 137. Continued movement of connector 115 is continued until the connector reaches the position shown in Figures 3A and 3B , at which point the split ring 141 contracts inwardly to occupy the groove 113 of pipe end 101, thereby locking the connector 115 in position about the pipe end. At this position the O-ring 133 bears onto the outer surface of pipe end 101 forming a sealing connection between connector 115 and the pipe end 101.

Pipe end 101 may then be connected to pipe end 103 by bringing the two pipe ends, and their associated nuts 109, 117 together and turning nut 109 relative to nut 117 so as to engage the threaded mating parts 112 and 117. This relative movement is continued until the chamfered end 119 of connector 117 engages with the frusto-conical end 107 of head portion 105 of pipe end 103, that is to say, to the position shown in Figure 3B.

In another similar embodiment (not shown) the length of threaded section 117 of connector 115 is less than that indicated in Figures 3A and 3B. As a result, the coupling is completed before the chamfered surface 119 of the connector 115 engages the frusto-conical surface 107 of pipe end 103. Rather, the coupling is completed when the forward end of nut 109 engages with surface 119 of enlarged portion 123 of nut 115, thereby compressing the O-ring 127 and effecting sealing engagement between the two nuts 109, 115.

Referring to Figures 3A and 3B of the accompanying drawings, there is illustrated the coupling together of two pipe ends 141 and 143. Associated with pipe end 141 is a collar or nut 145 which is essentially identical in structure with the nut 115 of Figures 3A and 3B and therefore will not be further described. Associated with pipe end 143 is a further collar or nut 147 which, in this case, is especially adapted for use with nut 145 and, together or separately with nut 145, may be regarded as part of the present invention.

Pipe end 143 is provided with an outer circumferential groove similar to that of pipe end 141. Nut 147 is designed to be the female counterpart of "male" nut 145. Accordingly, it is provided with an internal threaded section 149 at its forward end. The rearward end of nut 147 is for accommodating the pipe end 143 and is provided with two recesses 151 and 153. Recess 153 is provided with a locking ring 154 similar to that described above with reference to item 141 of Figures 3A and 3B. Forward recess 151 accommodates an O-ring 155 and an anti-extrusion ring 157. Between threaded portion 149 and the rearward remainder of nut 147 there is located an inwardly directed flange 159.

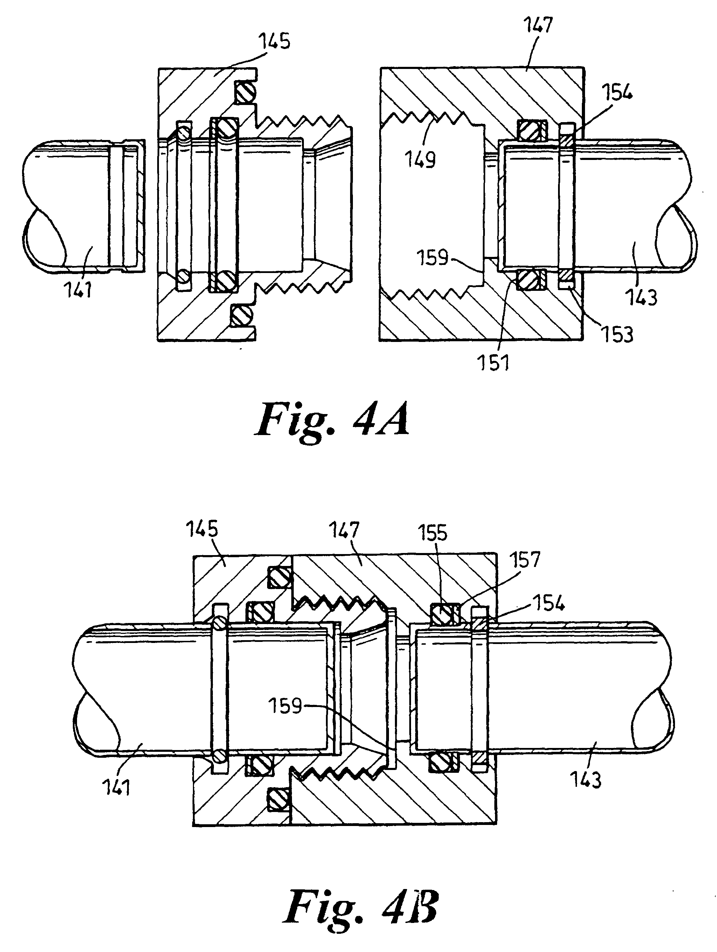

Assembly of the coupling to the position shown in Figure 4B is simple. The two nuts or connectors 145, 147 are pushed over their respective pipe ends with pipe end 143 abutting against inner flange 159 and the locking ring 154 occupying the groove in the pipe end 143. Locking ring 154 engages within the groove of pipe end 143 thereby locking together the nut 147 and pipe end 143. Sealing is effected between the nut 147 and the pipe end 143 by means of O-ring 151.

The pipe ends are brought together and relative rotation between male nut 145 and female nut 147 is effected until the position shown in Figure 4B is reached. At this position the forward end of female nut 147 abuts against the forward end of the enlarged portion of nut 145 and compresses the O-ring at this point of engagement, thereby effecting sealing between the two nuts.

It should be appreciated that, due to the presence of the chamfered surface 139 (Figures 3A and 3B and the equivalent in Figures 4A and 4B) any large increase in hydraulic pressure within the connected together assembly will tend to cause the locking ring 141 to be pushed more firmly into the groove in the pipe end thereby securing the connector 145 on the pipe end even more firmly.

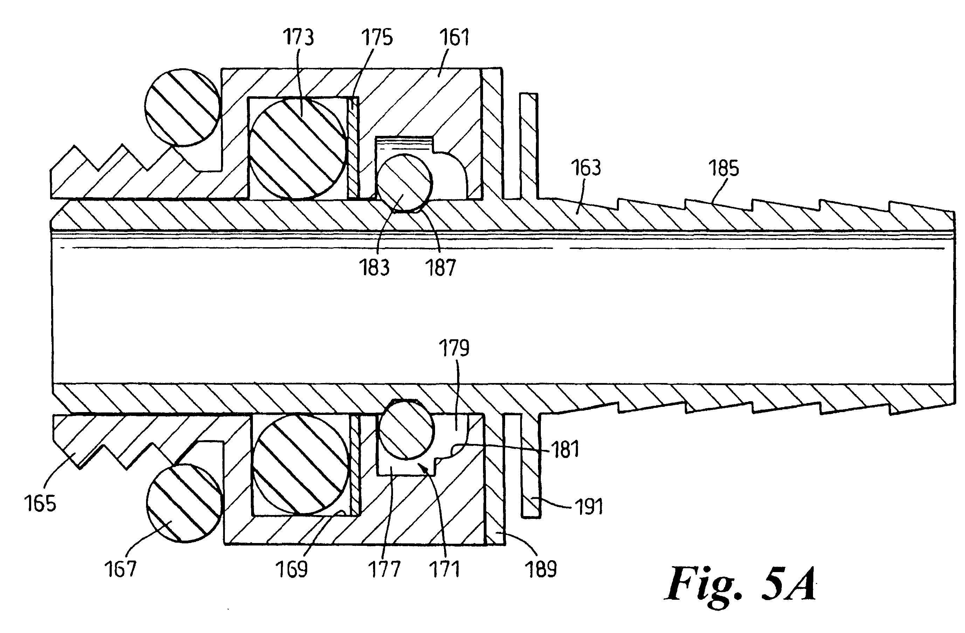

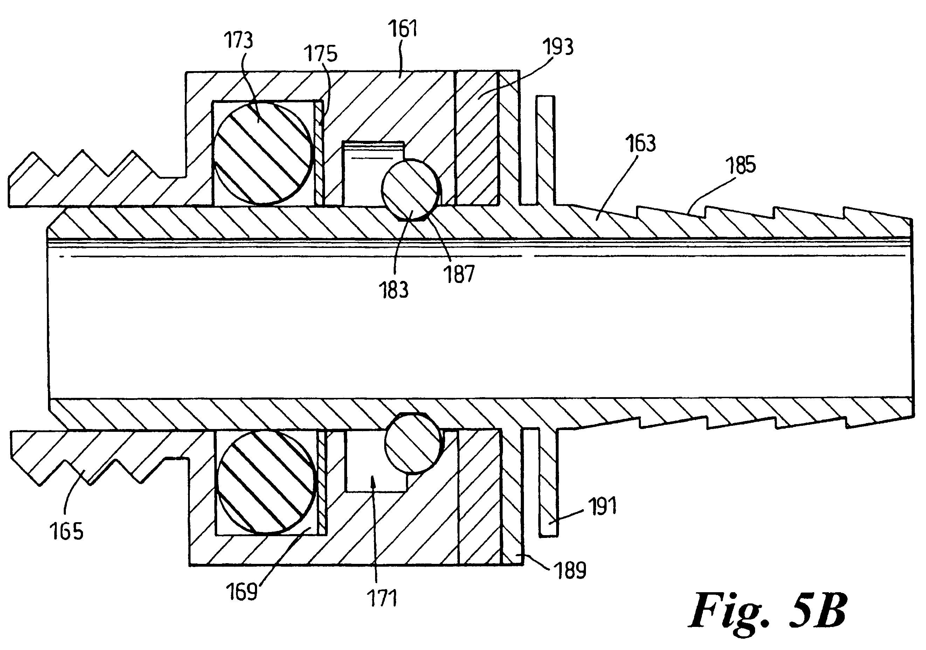

Referring to Figures 5A and 5B of the accompanying drawings, a further embodiment of the invention is a connector 161 which is shown together with a hose engaging element 163. Connector 161 is in the form of a collar having adjacent one end an externally threaded section 165 for engagement with the correspondingly threaded section of a pipe end or other fitting. Threaded section 165 of connector 161 is provided with an O ring 167 providing sealing engagement with said pipe end or other pipe fitting.

Adjacent threaded section 165 of connector 161, the connector is stepped outwardly so that the remainder of the length of the connector is of relatively greater diameter. Within this section there are provided two annular recesses 169 and 171, both of which open radially inwardly. Recess 161 accommodates O ring 173 which provides sealing engagement between connector 161 and the outer surface of hose engaging element 163. Also provided within recess 169 is an anti-extrusion ring 175.

Recess 171 is shaped so as to provide a first portion 177 of rectangular cross-section and, extending towards that end of connector 161 remote from threaded section 165, a "nose" portion 171 having a curved surface 181 extending from portion 177 of recess 171 in a direction radially inwardly and towards the adjacent end of the collar. The curvature of recess portion 171 corresponds to the curvature of split ring 183 to be described below.

Located within recess 171 is an H/T steel split ring 183 which is expandable between the configuration shown in Figures 5A and 5B and a relatively larger diameter configuration. It is internally spring-biased towards the position shown in Figures 5A and 5B.

Hose engaging element 163 has an inner surface of constant dimension and an outer surface which includes a serrated portion 185 extending from one end over about one-third to one-half its length. The remainder of hose engaging element 163 is of constant outer dimension apart from the presence of a groove 187 for accommodating split ring 183 and, between this groove and serrated portion 185, annular flanges 189 and 191.

Figure 5A shows the assembly after pushing together the two main parts, connector 161 and hose engaging element 163. Figure 5B is similar to Figure 5A but illustrates the inclusion of an anti-chattering ring 193 that is inserted during assembly to prevent any lateral movement between the connector 161 and the hose engaging element 163. With this ring 193 in place, it can be seen that split ring 183 is then accommodated largely within portion 179 of recess 171. As a result, the split ring 183 is held firmly in position and is unable to move in any direction within the connector as pressure within the assembly increases during use. This avoids movement or "chatter" of the split ring which would otherwise occur during pressure pulses resulting from fluid movement within the assembly. Such "chatter" can damage the components of the assembly and harden the split ring to the point where it becomes brittle and eventually shatters.

It should be appreciated that the above described couplings are not only easily assembled but are also easily disassembled. They may indeed be subjected to repeated assembly or disassembly during their lifetime.

## Claims

1. A connector for forming a connection between the tubular end of a first fluid conveying member and a threaded end of a second fluid conveying member, the connector having a threaded portion for engagement with a threaded end of said second fluid conveying member, means for engaging an external circumferentially extending groove located on the tubular end of said first fluid conveying member, means for effecting sealing engagement with said tubular end of said first fluid conveying member and means for effecting sealing engagement with said threaded end of said second fluid conveying member.

2. A connector according to claim 1 having a non-integral threaded end for engagement with the threaded portion of the connector.

3. A connector according to claim 1 or claim 2 in which said means for effecting sealing engagement with said threaded end of said second fluid conveying member effects said sealing between radially abutting surfaces of said connector and said threaded end of said second fluid conveying member.

4. A connector according to any of the preceding claims in which said groove engaging means is movable radially between a non-engaging position and an engaging position.

5. A connector according to claim 4 in which the groove engaging means are biased into an engaging position.

6. A connector according to any of the preceding claims in which said groove engaging element is located rearwardly of said means for effecting sealing engagement with said tubular end of said first fluid conveying member.

7. A connector according to any of the preceding claims in which said groove engaging means is in the form of a split ring which is located in an annular recess of the connector.

8. A connector according to Claim 7 wherein said annular recess has a first portion for accommodating substantially the entirety of the split ring in an expanded condition and a second portion, longitudinally adjacent said first portion, for holding the split ring in a contracted condition.

9. A coupling comprising a connector according to any of the preceding claims and an elongate hose engaging element, the connector being in the form of a collar having a threaded portion for engagement with a threaded pipe end, the connector being provided with sealing means for sealing between the collar and the hose engaging element.

10. A coupling for forming a connection between the tubular ends of two grooved fluid conveying members, said coupling comprising two connectors according to any of claims 1 to 8 which are capable of threaded engagements with each other in order to effect the coupling between the two grooved fluid conveying members.

## Patentansprüche

1. Verbindungsstück zum Herstellen einer Verbindung zwischen dem rohrförmigen Ende eines ersten fluidführenden Teiles und einem mit einem Gewinde versehenen Ende eines zweiten fluidführenden Teiles, wobei das Verbindungsstück einen Gewindeabschnitt zum Eingriff mit einem mit einem Gewinde versehenen Ende des zweiten fluidführenden Teiles, Mittel zum Eingriff mit einer äußeren, in Umfangsrichtung verlaufenden Nut, die sich am rohrförmigen Ende des ersten fluidführenden Teiles befindet, Mittel zum Bewirken eines dichtenden Eingriffs mit dem rohrförmigen Ende des ersten fluidführenden Teiles und Mittel zum Bewirken eines dichtenden Eingriffs mit dem mit einem Gewinde versehenen Ende des zweiten fluidführenden Teiles aufweist.

2. Verbindungsstück nach Anspruch 1 mit einem nicht-einstückigen, mit einem Gewinde versehenen Ende für einen Eingriff mit dem Gewindeabschnitt des Verbindungsstückes.

3. Verbindungsstück nach Anspruch 1 oder Anspruch 2, bei dem die Mittel zum Bewirken eines dichtenden Eingriffs mit dem mit einem Gewinde versehenen Ende des zweiten fluidführenden Teiles diese Dichtung zwischen radial gegeneinander anliegenden Flächen des Verbindungsstückes und des mit einem Gewinde versehenen Endes des zweiten fluidführenden Teiles bewirken.

4. Verbindungsstück nach einem der vorhergehenden Ansprüche, bei dem die Nuteingriffsmittel radial zwischen einer eingriffsfreien Stellung und einer Eingriffsstellung beweglich sind.

5. Verbindungsstück nach Anspruch 4, bei dem die Nuteingriffsmittel zu einer Eingriffsstellung hin vorgespannt sind.

6. Verbindungsstück nach einem der vorhergehenden Ansprüche, bei dem das Nuteingriffsteil hinter den Mitteln zum Bewirken eines dichtenden Eingriffs mit dem rohrförmigen Ende des ersten fluidführenden Teiles angeordnet ist.

7. Verbindungsstück nach einem der vorhergehenden Ansprüche, bei dem die Nuteingriffsmittel in Form eines Schlitzringes vorliegen, der in einer ringförmigen Aussparung des Verbindungsstückes sitzt.

8. Verbindungsstück nach Anspruch 7, bei dem die ringförmige Aussparung einen ersten Abschnitt zur Aufnahme im wesentlichen des gesamten Schlitzringes in aufgeweitetem Zustand und einen zweiten Abschnitt, der in Längsrichtung benachbart dem ersten Abschnitt angeordnet ist, zum Haltern des Schlitzringes im nicht-erweiterten Zustand aufweist.

9. Kupplung, die ein Verbindungsstück nach einem der vorhergehenden Ansprüche und ein langgestrecktes Schlaucheingriffselement umfaßt, wobei das Verbindungsstück in Form eines Kragens vorliegt, der einen Gewindeabschnitt zum Eingriff mit einem ein Gewinde aufweisenden Rohrende aufweist, und mit Dichtmitteln zum Abdichten zwischen dem Kragen und dem Schlaucheingriffselement versehen ist.

10. Kupplung zum Herstellen einer Verbindung zwischen den rohrförmigen Enden zweier genuteter, fluidführender Teile, wobei die Kupplung zwei Verbindungsstücke nach einem der Ansprüche 1 bis 8 umfaßt, die in Gewindeeingriff miteinander treten können, um die Verbindung zwischen den beiden genuteten, fluidführenden Teilen herzustellen.

## Revendications

1. Connecteur pour former une connexion entre l'extrémité tubulaire d'un premier élément de transport de fluide et une extrémité filetée d'un second élément de transport de fluide, le connecteur ayant une partie filetée apte à s'engager avec une extrémité filetée dudit second élément de transport de fluide, des moyens pour engager une rainure s'étendant périphériquement extérieurement disposée sur l'extrémité tubulaire dudit premier élément de transport de fluide, des moyens pour réaliser un engagement étanche avec ladite extrémité tubulaire dudit premier élément de transport de fluide et des moyens pour réaliser l'engagement étanche avec ladite extrémité filetée dudit second élément de transport de fluide.

2. Connecteur selon la revendication 1, ayant une extrémité filetée non entière pour l'engagement avec la partie filetée du connecteur.

3. Connecteur selon la revendication 1 ou 2, dans lequel lesdits moyens pour réaliser l'engagement étanche avec ladite extrémité filetée dudit second élément de transport de fluide réalise ladite liaison étanche entre les surfaces radialement en contact dudit connecteur et ladite extrémité filetée dudit second élément de transport de fluide.

4. Connecteur selon l'une des revendications précédentes, dans lequel lesdits moyens d'engagement de la rainure sont déplaçables radialement entre une position de non-engagement et une position d'engagement.

5. Connecteur selon la revendication 4, dans lequel les moyens d'engagement de la rainure entraînent vers une position d'engagement.

6. Connecteur selon l'une des revendications précédentes, dans lequel ledit élément d'engagement de la rainure est disposé en arrière desdits moyens pour réaliser l'engagement étanche avec ladite extrémité tubulaire dudit premier élément de transport de fluide.

7. Connecteur selon l'une des revendications précédentes, dans lequel lesdits moyens d'engagement de la rainure sont sous la forme d'une bague fendue qui est disposée dans un repli annulaire du connecteur.

8. Connecteur selon la revendication 7, **caractérisé en ce que** ledit repli annulaire a une première partie pour accommoder de manière sensible l'intégralité de ladite bague fendue dans un état étendu et une seconde partie, longitudinalement adjacente à ladite première partie, pour porter la bague fendue dans un état contracté.

9. Raccordement comprenant un connecteur selon l'une des revendications précédentes et un élément d'engagement de logement allongé, le connecteur étant sous la forme d'un collier ayant une partie filetée pour l'engagement avec une extrémité de tuyau fileté, le connecteur étant prévu avec des moyens de liaison étanche pour joindre de manière étanche le collier et l'élément d'engagement de logement.

10. Raccordement pour former une connexion entre les extrémités tubulaires de deux éléments de transports de fluide rainurés, ledit raccordement comprenant deux connecteurs selon l'une des revendications 1 à 8 qui peuvent réaliser des engagements filetés l'un avec l'autre afin de permettre le raccordement entre les deux éléments de transports de fluide rainurés.
